Europäisches Patentamt

(19) European Patent Office

Office européen des brevets

(11) Publication number : **0 340 518 B1**

(12) **EUROPEAN PATENT SPECIFICATION**

(45) Date of publication of patent specification :
**11.12.91 Bulletin 91/50**

(51) Int. Cl.⁵ : **F16L 37/08**

(21) Application number : **89106855.3**

(22) Date of filing : **17.04.89**

(54) **Quick-release plug-in coupling means for breakaway connection of hoses and fluid conduits.**

(30) Priority : **04.05.88 IT 4572388**

(43) Date of publication of application :
**08.11.89 Bulletin 89/45**

(45) Publication of the grant of the patent :
**11.12.91 Bulletin 91/50**

(84) Designated Contracting States :
**AT DE ES FR GB GR IT NL SE**

(56) References cited :
**EP-A- 0 206 582**
**GB-A- 2 186 652**
**US-A- 4 660 803**
**US-A- 4 669 757**

(73) Proprietor : **UNIFLEX UTILTIME S.p.A.**
**Via dell'Industria 1**
**I-33086 Montereale Valcellina (Pordenone) (IT)**

(72) Inventor : **Licciardello, Maria**
**via E. Toti 24**
**I-33170 Pordenone (IT)**
Inventor : **Borghese, Alladino**
**via Dalmazia 13**
**I-33086 Montereale Valcellina Pordenone (IT)**

(74) Representative : **Giugni, Valter et al**
**PROPRIA Protezione Proprietà Industriale**
**S.p.A. Via Mazzini 13**
**I-33170 Pordenone (IT)**

EP 0 340 518 B1

## Description

This invention relates to a quick-release, plug-in coupling for the connection of hoses and other fluid carrying conduits, in particular flexible conduits for watering and irrigating equipment. Coupling means of such a type are technically known since a long time and are substantially formed by a male member connected to a first hose portion and capable of being plugged into a corresponding female member connected to a second hose portion, the connection between male and female members being made through an actuating member provided internally with elastic means which slip through suitable openings in the female member body and engage in suitable catch slots in the male member body.

Known are also couplings where a valve is located inside the female member for stopping the fluid, said valve becoming active when the coupling is released so that fluid is prevented from flowing out. All these coupling means are currently made using a variety of plastic materials selected among those which are suitable for such applications. A recent solution is as disclosed by the US patent 4,219,222 (Brusadin) which describes a quick-release coupling where the actuating member is an axially sliding ring nut, inside which the elastic means used to engage both the male and female members are integrally moulded therewith.

This solution appears to be quite unpractical, since a double operation is required to release the coupling, ie. the male member shall be pushed against the female member while the ring nut is moved in the release direction. Furthermore, said solution is not very reliable, since the elastic means can get stuck during actuation and, as a consequence, break off. Finally, no fluid sealing valve is provided for by this solution.

Another recent solution is as disclosed by the US patent 4,429,906 (Spadotto et al.), where the female member is provided with locking   Is which are pressed by elastic pushing means    rally made as a single piece of flexible material ;  .e connection is made by directly plugging the male piece into the female one, while an axially sliding ring nut is provided on the outside of the coupling for releasing the coupling itself.

In this case the advantage of an improved convenience of use is set off by the disadvantages represented by the need for an additional elastic piece, which is difficult to mould, as well as a reduced reliability due to the high assembly accuracy required and the free moving plastic member inside the coupling.

The US Patent 4,660,803 (Johnston et al.) still discloses a further type of quick-release coupling where the ring nut provided for actuating the breakaway joint embodies internally integrally moulded a number of elastic fingers intended to ensure an engagement of the male piece with the female one, as well as a number of lugs designed to lock the female piece.

A fluid sealing valve is located inside the female piece body and is locked in place between an annular projection provided inside the female piece and a tang mounted on the end part of the fluid feeding hose.

In this case, however, the solution still appears as being quite complex due to the moulding of the internal profile of the actuating ring nut. Furthermore, the tang provided on the fluid feeding hose end can be regarded as an additional part requiring assembly, while not ensuring an adequate fluid sealing action, unless it is welded thereon, which thing would however imply an additional manufacturing step to be carried out.

Finally, the European patent application 0,219,705 (Protec) discloses a fluid-sealing breakaway coupling where the plug-in and locking members are integrally moulded as a single piece with the female piece body. However, this considerably complicates the construction of the whole female piece, which shall necessarily be made of high-quality, expensive plastic material (acetal resins) Furthermore, this solution still needs an external ring nut to actuate the coupling.

Generally speaking, all these known types of couplings also have the disadvantage of possibly becoming released accidentally, since they are frequently dragged on the ground, where they meet with obstacles of a various kind, such as stones, roots, edges of pavings, floors and flower-beds, etc.

All these types of hose coupling means shall finally be provided with suitable retaining means for the actuating ring nut in order to prevent it from slipping off when the joint is released and displacing axially when the joint is plugged-in. Usually, these retaining means are directly moulded or otherwise obtained in the body of the ring nut itself and are made up by suitable teeth engaging into corresponding catch slots in the female piece body (such as described in the aforementioned US patent 4,660,803). It appears clearly that this fact makes both the ring nut and the female piece far more complicated to be moulded.

It is therefore desirable — and it is the main purpose of this invention — to design a quick-release, plug-in coupling of the afore discussed type, which however will prove easier to be manufactured, more reliable and capable of eliminating such an inconvenience as represented by its becoming accidentally released during its use.

The coupling according to this invention therefore comprises a male plug-in piece capable of being plugged into a female piece, and at least one actuating member provided with elastic means integrally moulded inside this member and intended to ensure a firm joint between the male piece and the female piece, said male piece being provided with recepta-

cies to accomodate the ends of said elastic means as well as a water-tight seal at its plug-in end into the female piece, and said female piece being provided with openings through which the ends of said elastic means shall stretch as well as an internal seat housing a fluid sealing stop valve, characterized in that said elastic means are provided with means for ensuring the correct positioning of the actuating member with respect to the body of the female piece, which positioning means are moulded onto the free end of said elastic means and are formed by a recess capable of engaging with the border facing downstream of the flow direction of the fluid of said openings in the body of the female piece. The invention will be further described by way of non-limiting example with reference to the accompanying drawings wherein :

— Figure 1 is a schematic view taken in section along the longitudinal axis of the coupling according to this invention ; and
— Figures 2-4 are views of an enlarged detail of the coupling of Fig. 1, taken from the front, in section along the longitudinal axis and in cross-section respectively.

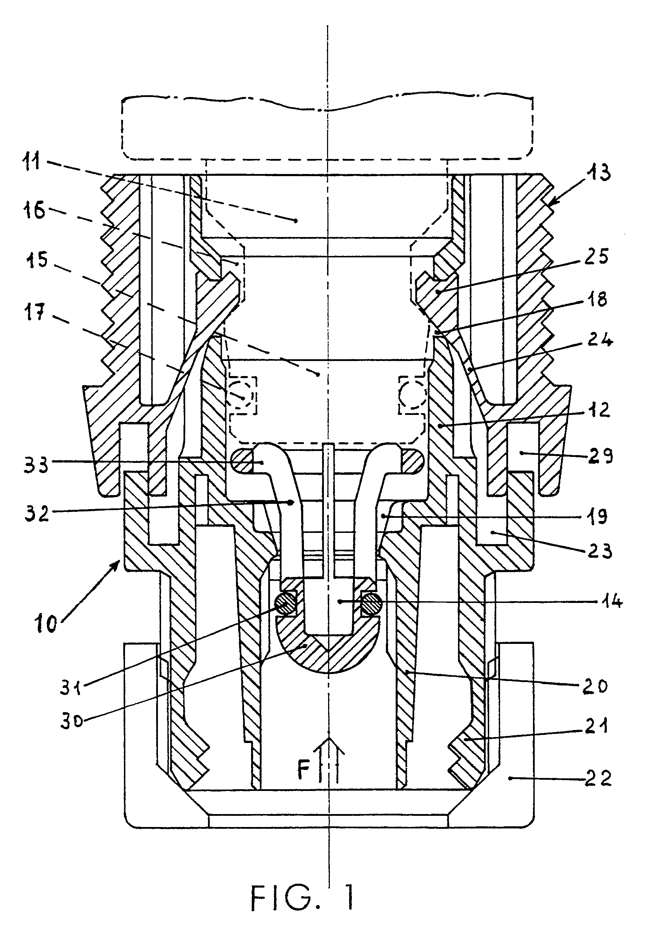

Referring to Figure 1, the coupling 10 comprises a male piece 11, a female piece 12, at least an actuating member 13 and a valve 14.

In Figure 1 the coupling is shown in its plugged-in state.

The male piece 11, onto which one of the hose lengths to be connected is attached in a per se known way, is provided within a plug-in end 15 having an outer diameter precisely sized to ensure fitting into the female piece 12, and is axially bored to ensure the passage of the fluid. Receptacles 16 with an inclined-plane profile are moulded along the outer surface of the end piece 15 to accomodate — as it will be shown later — the elastic means of the actuating member 13; furthermore traditional water-tight rubber sealing means 17 of the 0-ring type are applied to the end piece 15.

The female piece 12 is provided — in that portion of its body which is intended to accomodate the male piece — with pass-throug openings in-to which the elastic means of the actuating member 13 penetrate.

An annular projection 19 is moulded inside the female piece body 12, which acts as a seat with related positive stop for the valve 14, as it will be shown later.

The female piece body 12 extends to include an internal tubular section 20, onto which the in-flowing fluid hose (not shown) is attached in a normal way, as well as external jaw clutches 21 on which a ring nut 22 is screwed. The in-flowing fluid hose is then scarfed and clamped between the tubular section 20 and the jaw clutches 21 through the tightening of the ring nut 22 in a quite usual way.

Finally, the female piece 12 is provided on its outer surface — at a central location — with longitudinal runners 23 on which the actuating member 13 is made to slide axially.

Said actuating member, according to a feature of this invention, is formed by two sliders 13 which are placed in a diametrally opposed location and have a knurled outer surface and an enlarged border along the side facing ahead of the flow direction of the fluid (shown by the arrow F) for an improved convenience in handling and actuating the coupling.

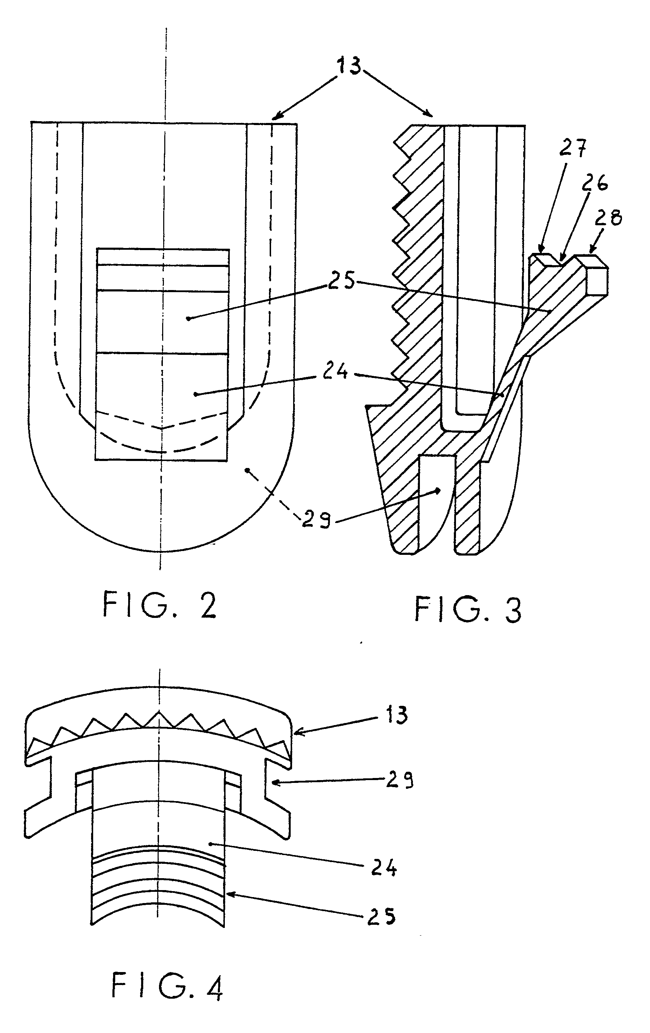

Each slider 13 is internally provided with elastic means 24 protruding in the flow direction of the fluid and featuring enlarged free ends 25 capable of engaging in the corresponding receptacles 16 in the male piece 11 through the openings 18 in the female piece 12 (Figs. 2-4).

According to an important feature of the invention, the end 25 of each elastic means 24 is profiled in order to show a recess 26 which acts as the means provided to positively ensure the correct position of the slider 13 with respect to the female piece body 12.

The recess 26 is defined by a projecting border 27 running along the radially outer edge of the end 25 — so that it acts as a stop ledge against the outer tapered surface of the opening 18 in the female piece — and a projecting triangular-section border 28 running along the radially inner edge of the end 25. The projecting border 28 has a base width which is greater than the thickness of the border of the opening 18 in the female piece.

This special profile of the end 25 is such as to effectively prevent the slider 13 from both slipping off when the coupling is released (since the border 28 remains engaged against the border of the opening 18), and displacing axially on the female 12 when the coupling is plugged-in (since the recess 26 remains engaged with the border of the opening 18).

As a consequence, the need for any further means for keeping the slider 13 in place is eliminated, as compared with the hitherto known types of quick-release coupings, where such means were required in form of teeth and projections to be directly moulded on the actuating member and the female piece, respectively, thus making both parts more complex to design and less reliable in their construction.

Each slider 13 is further provided (Figs. 2-4) with a continuous peripheral groove 29 running along both longitudinal sides as well as along the side facing ahead of the flow direction of the fluid ; such a groove 29 enables the slider 13 to be axially displaced on the runners 23 of the female piece in order to actuate the fitting-in of the coupling. Finally — as already mentioned — a stop valve 14 is housed inside the female piece 12 for sealing off the fluid, ie. it trips when the coupling is released in order to prevent fluid from flowing out the disconnected joint. The valve 14 — made as a single piece — is formed by an ogive 30 equipped with related rubber 0-ring seal 31 facing the in-flowing fluid in the tubular section 20. The valve 14 is further provided with a number of feet 32 which protrude through the annular projection 19 in the female piece and are connected at their ends by a ring 33 capable of stopping against said projection 19 on the out-flowing side of the fluid. The rigid structure of the valve, deriving from the fact that its feet are not elastically flexible, enables the same valve 14 to be snapped into the seat 19 by pressing it from its fluid delivery side, thus ensuring a quicker, easier assembly, a better tightness and a more effective sealing property.

The water tightness is in fact ensured by the seal 31 which radially protrudes from the ogive 30 and presses against the suitably tapered border of the seat 19 on the side facing the in-flowing fluid, when the male piece 11 is unplugged and the in-flowing fluid pressure acts on the valve in its sealing direction.

It must be pointed out that the particular solution adopted with the two mutually independent sliders 13 is such as to solve the problem connected with the possible accidental release of the coupling during use due to its being dragged on the ground where it can strike against various obstacles. As a matter of fact, even if one of the sliders 13 strikes against a stone a root or a similar hindrance and therefore is caused to release, the opposite slider would certainly not be concerned by the same obstacle and would therefore keep the coupling firmly plugged-in

On the other hand the main feature of the coupling according to this invention, ie: the fact that the elastic means 24-25 of the actuating member 13 act at the same time as the means for keeping the member 13 correctly in position on the female piece 12, is still to be considered as fully advantageous even if said actuating member is made as a traditional single-piece ring nut instead of two separate sliders.

## Claims

1. Quick-release plug-in coupling joint for the connection of hoses, especially hose conduits for the distribution of fluids, comprising a male plug-in piece (11) capable of being plugged into a female piece (12), and at least one actuating member (13) provided with elastic means (24) integrally moulded inside this member and intended to ensure a firm joint between the male piece and the female piece, said male piece (11) being provided with receptacles (16) to accomodate the ends (25) of said elastic means as well as a water-tight seal (17) at its plug-in end into the female piece, and said female piece (12) being provided with openings (18) through which the ends (25) of said elastic means shall stretch as well as an internal seat (19) housing a fluid sealing stop valve (14), characterized in that said elastic means (24) are provided with means (26-28) for ensuring the correct positioning of the actuating member (13) with respect to the body of the female piece (12), which positioning means are moulded onto the free end (25) of said elastic means (24) and are formed by a recess (26) capable of engaging with the border facing downstream of the flow direction of the fluid of said openings (18) in the body of the female piece (12).

2. Quick-release plug-in coupling joint according to claim 1, characterized in that said recess (26) is defined by a ridge (27) running along the radially outer side of the elastic means (24) and capable of stopping against the tapered outer surface of the corresponding opening (18) in the female piece (12), as well as by another triangular-section ridge (28) running along the radially inner side of the elastic means (24), said triangular-section ridge (28) having a base width which is greater than the thickness of the border of the opening (18) in the female piece (12).

3. Quick-release plug-in coupling joint according to anyone of the claim 1 or 2, characterized in that said actuating member is formed by at least two sliders (13) which are mutually independent and mounted in a sliding way on corresponding longitudinal runners (23) that are moulded externally on the body of the female piece (12).

4. Quick-release plug-in coupling joint according to anyone of the claim 1 or 2, characterized in that said actuating member (13) is formed by an annular ring nut mounted in a sliding way on longitudinal runners (23) which are externally moulded on the body of the female piece (12).

## Patentansprüche

1. Schnellkupplung für die lösbare Verbindung von Schlauchleitungen, insbesondere Schlauchleitungen für die Verteilung von Flüssigkeiten, im wesentlichen bestehend aus einem Einsteckzapfen (11), der in ein Mutterstück (12) einsteckbar ist, und mindestens einem Betätigungsstück (13), das mit einstückig innerhalb des genannten Betätigungsstück geformten, zum Sichern einer festen Verbindung zwischen den genannten Einsteckzapfen und Mutterstück dienenden elastischen Mitteln (24) versehen ist, wobei solcher Einsteckzapfen (11) mit zur Aufnahme der Endstücke (25) der genannten elastischen Mittel dienenden Sitzen (16) sowie mit einem wasserdichten, an seinem in das Mutterstück einsteckbaren Ende angeordneten Dichtmittel (17) versehen ist, und wobei das genannte Mutterstück (12) mit für den Durchgang der Endstücke (25) der genannten elastischen Mittel vorgesehenen Öffnungen (18) sowie mit einem das zum Absperren des Flussigkeitsstromes vorgesehene Ventil (14) aufnehmenden Innensitz (19) versehen ist, dadurch gekennzeichnet, daß die genannten elastischen Mittel (24) mit zur korrekten Positionierung des Betätigungsstückes (13) mit Bezug auf den Körper des genannten Mutterstückes (12) dienenden Mitteln (26-28) versehen sind, wobei solche Positioniermittel an dem freien Ende (25) der genannten elastischen Mittel (24) einstuckig geformt sind und aus einer Vertiefung (26) bestehen, die zum Eingreifen mit dem stromabwärts der Fließrichtung der Flüssigkeit gewandten Rand der genannten öffnungen (18) im Körper des Mutterstückes (12) geeignet ist.

2. Schnellkupplung für die lösbare Verbindung von Schlauchleitungen nach dem Anspruch 1, dadurch gekennzeichnet, daß die genannte Vertiefung (26) durch einen sich an der radial äußeren Seite des elastischen Mittels (24) erstreckenden, zum Anschlagen gegen die ausgekeilte Außenfläche der entsprechenden öffnung (18) im Mutterstück (12) fähigen Ansatz (27) sowie durch einen weiteren, sich an der radial inneren Seite des elastischen Mittels (24) erstreckenden und einen Dreikant-Querschnitt aufweisenden Ansatz (28) abgegrenzt ist, wobei solcher Ansatz (28) mit Dreikant-Querschnitt eine Basisbre ite ausweist, die größer als die Stärke des Randes der entsprechenden öffnung (18) im Mutterstück (12) ist.

3. Schnellkupplung für die lösbare Verbindung von Schlauchleitungen nach einem der vorhergehenden Ansprüche 1 und 2, dadurch gekennzeichnet, daß das genannte Betätigungsstück aus mindestens zwei voneinander unabhängigen, gleitend auf entsprechenden außenseitig am Körper des Mutterstückes (12) geformten Gleitführungen (23) angebrachten Schiebern (13) besteht.

4. Schnellkupplung für die lösbare Verbindung von Schlauchleitungen nach einem der vorhergehenden Ansprüche 1 und 2, dadurch gekennzeichnet, daß das genannte Betätigungsstück (13) aus einer gleitend auf entsprechenden außenseitig am Körper des Mutterstückes (12) geformten Gleitführungen (23) angebrachten ringförmigen Nutmutter besteht.

## Revendications

1. Raccord rapide à décliquetage pour la liaison de tubes flexibles, notamment tubes flexibles pour la distribution de fluides, comprenant un élément mâle (11) apte à être introduit dans un élément femelle (12) correspondant, et au moins un élément d'enclenchement (13) muni de moyens élastiques (24) moulés de façon intégrale à l'intérieur de cet élément et étant propres à assurer une jonction solide entre ledit élément mâle et ledit élément femelle, ledit élément mâle (11) étant pourvu de réceptacles (16) pour accueillir les extrémités (25) desdits moyens élastiques ainsi que d'une joint d'étanchéité à étanche d'eau (17) en correspondance de son extrémité introduisable dans ledit élément femelle, et ledit élément femelle (12) étant pourvu d'ouvertures (18) propres à assurer le passage des extrémités (25) desdits moyens élastiques ainsi que d'un siège intérieur (19) accueillant une soupape (14) d'arrêt du fluide, caractérisé en ce que lesdits moyens élastiques (24) sont pourvus de moyens (26-28) propres à assurer le positionnement correct de l'élément d'enclenchement (13) par rapport au corps de l'élément femelle (12), lesdits moyens de positionnement étant moulés de façon intégrale en correspondance de l'extrémité libre (25) desdits moyens élastiques (24) et étant formés par un creux (26) capable de s'engager avec le bord tourné en aval du sens d'écoulement du fluide desdites ouvertures (18) dans le corps de l'élément femelle (12).

2. Raccord rapide à décliquetage pour la liaison de tubes flexibles selon la revendication 1, caractérisé en ce que ledit creux (26) est défini par un bord en relief (27) s'étendant au long du côté radialement extérieur du moyen élastique (24) et apte à buter contre la surface effilée extérieure de l'ouverture (18) correspondante dans l'élément femelle (12), ainsi que par un autre bord en relief (28) ayant une section triangulaire et s'étendant au long du côté radialement intérieur du moyen élastique (24), ledit bord en relief à la section triangulaire (28) ayant une largeur de base qui est plus grande que l'épaisseur du bord de l'ouverture (18) dans l'élément femelle (12).

3. Raccord rapide à décliquetage pour la liaison de tubes flexibles selon la revendication 1 ou 2, caractérisé en ce que ledit élément d'enclenchement est formé par au moins deux curseurs (13) qui sont réciproquement indépendants et montés de façon coulissante sur des glissières longitudinales (23) correspondantes qui sont moulées extérieurement sur le corps de l'élément femelle (12).

4. Raccord rapide à décliquetage pour la liaison de tubes flexibles selon la revendication 1 ou 2, caractérisé en ce que ledit élément d'enclenchement (13) est formé par un embout annulaire monté de façon coulissante sur des glissières longitudinales (23) correspondantes qui sont moulées extérieurement sur le corps de l'élément femelle (12).

FIG. 1

FIG. 2

FIG. 3

FIG. 4